# EUROPÄISCHE PATENTSCHRIFT

(11) **EP 0 763 232 B1**
(45) Veröffentlichungstag und Bekanntmachung des Hinweises auf die Patenterteilung: **14.11.2001**
(21) Anmeldenummer: 96909167.7
(22) Anmeldetag: 02.04.1996
(51) Int. Cl.: G10K 11/02, B06B 1/06

(54) **PIEZOELEKTRISCHER ULTRASCHALLWANDLER**
PIEZO-ELECTRIC ULTRASOUND TRANSDUCER
TRANSDUCTEUR A ULTRASONS PIEZOELECTRIQUE

(30) Priorität: 03.04.1995 DE 19512417
(43) Veröffentlichungstag der Anmeldung: 19.03.1997
(73) Patentinhaber: MARCO SYSTEMANALYSE UND ENTWICKLUNG GmbH, D-85221 Dachau (DE)
(72) Erfinder: REUTER, Martin, D-85221 Dachau (DE); VOIGT, Konrad, D-07639 Bad Klosterlausnitz (DE); WEKSLER, Valeri, D-07629 Hermsdorf (DE)
(74) Vertreter: Pfeiffer, Rolf-Gerd, Dipl.-Phys.
(86) Internationale Anmeldenummer: EP9601445
(87) Internationale Veröffentlichungsnummer: WO9631870

(56) Entgegenhaltungen:
- DE-A- 3 920 663
- US-A- 3 750 279
- US-A- 4 072 871
- US-A- 4 219 889
- US-A- 4 471 475
- US-A- 4 536 862
- US-A- 4 718 046
- US-A- 4 735 096
- US-A- 5 130 953
- PATENT ABSTRACTS OF JAPAN vol. 10, no. 179 (E-414), 24.Juni 1986 & JP,A,61 026397 (MATSUSHITA ELECTRIC), 5.Februar 1986,

## Beschreibung

Die Erfindung betrifft einen piezoelektrischen Ultraschallwandler gemäß der Gattung des ersten Patentanspruchs, welcher insbesondere für Laufzeitmessungen Verwendung findet.

Zur Erzeugung von Ultraschall werden in der Regel Schwinger aus einem piezoelektrischen Material eingesetzt. Dabei kommt der Ankopplung des Schwingers an das Medium, in das der Ultraschall emittiert werden soll, eine große Bedeutung zu. Die Ankopplung ist dabei umso besser, je geringer der Unterschied in der Schallkenn-Impedanz zwischen dem Schwinger und genanntem Medium ist. Soll der Ultraschall in die Luft emittiert werden, ist die Ankopplung im allgemeinen besonders schlecht, da sich die Schallkenn-Impedanzen von Luft und Piezokeramikmaterial um mehrere Größenordnungen unterscheiden.

Trotz der grundsätzlichen Problematik genannter schlechter Anpassung wird die abgestrahlte Schalleistung um so höher, je größer die Schallamplitude ist. Aus diesem Grund werden, bei Maßgabe der Erreichung hoher Schalleistungen, solche Wandler grundsätzlich in Resonanz betrieben.
Will man, z.B. zu Laufzeitmessungen, kurze Schallimpulse emittieren, so muß entweder die Wandlerresonanz stark bedämpft werden, oder der Wandler muß unterhalb seiner niedrigsten Resonanzfrequenz betrieben werden. Bei einlagigen Dickenschwingern sind dann der erreichbaren Schallamplitude der den Schall abstrahlenden Fläche enge Grenzen gesetzt, da die erforderlichen Anregungsspannungen sehr hoch werden.

Eine vorliegender Erfindung am nächsten kommende Lösung wird in DE 39 20 663 A1 beschrieben. Bei dieser Lösung wird der sogenannte piezoelektrische Quereffekt (d₃₁-Effekt) ausgenutzt. In dieser Schrift wird vorgeschlagen, einen elektroakustischen Schallwandler aus einem oder mehreren piezokeramischen Plättchen zu fertigen, wobei der Raum zwischen den Plättchen mit einem Material geringer Schallkenn-Impedanz, bspw. bestehend aus in ein Harz eingebettete Glas- oder SiO₂-Hohlkugeln o.ä., ausgefüllt ist. Das gesamte Wandlerelement wird dabei durch einen massiven sandwichartigen Schichtpaketkörper gebildet, bei dem die abstrahlende und/oder empfangende Fläche durch eine Stirnseite des Schichtpaketes gebildet ist. Mit diesem Wandler sind konphase Oberflächenschwingungen mit nur einer vorbestimmten Richtcharakteristik erhaltbar. Diesem Wandler haftet der Nachteil an, daß er zum einen einzig in Resonanz mit einem ausreichend hohen Wirkungsgrad betreibbar ist. Zum anderen bedingen die gekoppelten mechanischen Eigenschaften des dortigen Schichtverbundes, je nach neu geforderter Frequenz, Leistung und Richtcharakteristik, eine völlige Neukonzipierung des gesamten Wandleraufbaus in all seinen Einzelbestandteilen. Desweiteren erfordert ein Wandler gemäß DE 39 20 663 A1, wenn er für Laufzeitmessungen verwendet werden soll, erhebliche zusätzliche Bedämpfungsmaßnahmen.

Der Erfindung liegt die Aufgabe zugrunde, einen piezoelektrischen Ultraschallwandler zu schaffen, bei dem unabhängig von der Wahl einer bestimmten Erregerfrequenz eine der elektrischen Anregung möglichst exakt folgende konphase, flächige Impulsemission mit geringen zeitlichen Verformungen des Impulses durch Ein- und Ausschwingvorgänge gewährleistet ist, und der bei geringen Amplituden der Anregungsspannung hinreichend große Schallpegel erzielen läßt. Weiterhin liegt der Erfindung die Aufgabe zugrunde, einen piezoelektrischen Ultraschallwandler anzugeben, der auch ohne zusätzliche Bedämpfungsmaßnahmen nach einem Sendevorgang sehr schnell wieder in einen empfangsbereiten Zustand übergeht.

Die Aufgabe wird durch die kennzeichnenden Merkmale des ersten Patentanspruchs gelöst. Das Wesen der Erfindung besteht in der Schaffung einer neuartigen, weitestgehend entkoppelten Anordnung einer (oder mehrerer) Lamelle(n) aus piezokeramischem Material, die in d₃₁ - Modus arbeiten und deren Wirkrichtung oder mindestens eine wesentliche Komponente davon über eine schmale Stirnfläche mit einer geometrisch anpaßbaren, massearmen aber biegefesten Deckplatte bzw. Deckplättchen verbunden ist (sind), deren Normale n₂ mit der oben genannten Bewegungsrichtung bzw. deren Komponenten übereinstimmt, wobei einzig der massearmen Deckplatte die Funktion einer schallabstrahlenden und/oder -empfangenden Fläche zugewiesen ist. In weiterer Ausgestaltung der Erfindung ist genannte Deckplatte insbesondere als ein selbständig eigenschwingungsfähiges System ausgebildet. Die gemäß der Erfindung zum Einsatz gelangenden piezokeramischen Lamellen sind in jedem Fall beidseits ihrer großen Seitflächen mit einer elektrisch leitfähigen Kontaktierungsbelegung versehen.

Weitere vorteilhafte Ausführungen der Erfindung ergeben sich aus den Unteransprüchen.

Die Erfindung wird nachstehend anhand von fünf grundlegenden Ausführungsformen und zugehöriger schematischer Zeichnungen näher erläutert. Es zeigen:
Fig. 1 eine Ansicht einer grundlegenden Ausführungsform gemäß der Erfindung,
Fig. 1a eine perspektivische Ansicht einer möglichen Ausführungsform gemäß Fig. 1,
Fig. 1b eine Ansicht einer weiteren Ausführungsform gemäß Fig. 1,
Fig. 2 eine Ansicht einer zweiten grundlegenden Ausführungsform gemäß der Erfindung,
Fig. 2a eine perspektivische Ansicht einer Ausführungsmöglichkeit nach Fig. 2,
Fig. 2b eine weitere Ausführungsform gemäß Fig. 2,
Fig. 3 eine Ansicht einer dritten Ausführungsform gemäß der Erfindung,
Fig. 3a eine Ansicht einer Variante nach Fig. 3,
Fig. 4 eine Ansicht einer vierten grundlegenden Ausführungsform gemäß der Erfindung,
Fig. 5 eine Möglichkeit einer Lamellenausbildung und Anordnung nach Fig. 4 in Draufsicht,
Fig. 6 eine weitere Möglichkeit einer Lamellenausbildung und Anordnung nach Fig. 4 in Draufsicht,
Fig. 7 eine fünfte grundlegende Ausführungsform gemäß der Erfindung in perspektivischer Ansicht auf eine, von einer Deckplatte freigelegten wabenförmigen Lamellenausbildung,
Fig. 8 eine schematische Draufsicht auf eine Grundplattenausbildung beim Einsatz einer Lamellenstruktur gemäß Fig. 7 und
Fig. 9 eine weitere Variante einer Ausbildung gemäß Fig. 4 in seitlicher Ansicht.

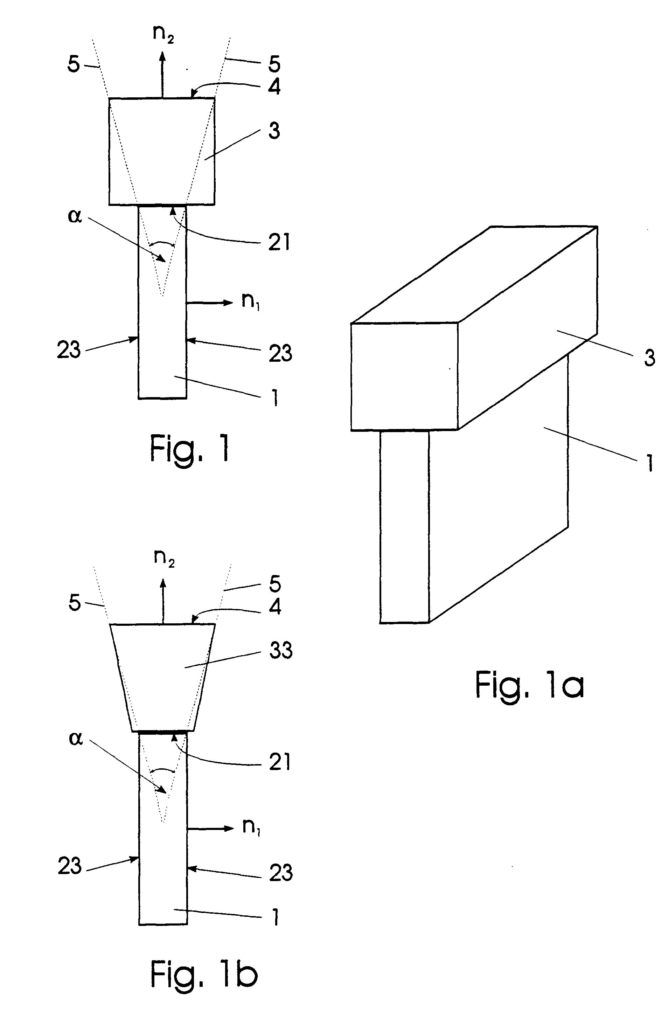

In Figur 1 ist eine erste Ausführungsform eines piezoelektrischen Ultraschallwandlers dargestellt, der aus einer piezokeramischen, plattenförmigen Lamelle 1 besteht, welche beidseits ihrer großen Seitenflächen 23 mit einer an sich üblichen, nicht näher dargestellten elektrischen Kontaktierungsbelegung versehen ist. An einer ihrer Schmalseiten 21 ist diese Lamelle 1 mit einer biegesteifen Deckplatte 3 verbunden. Die Deckplatte 3 ist im Vergleich zur Masse des piezokeramischen Schwingersystems, bestehend aus der Lamelle 1, genannten Elektrodenbelegungen und ggf. einer weiteren, nicht näher dargestellten Gegenplatte bzw. Schallreflexionsmitteln, relativ massearm ausgeführt. Auf Möglichkeiten einer massearmen Ausführung wird im nachfolgenden näher eingegangen. Die Normalenrichtungen, die zur deutlicheren Beschreibung auch weiterer Ausführungsbeispiele eingeführt sind, sind bei genannter Lamelle 1 mit n₁ und bei genannter Deckplatte 3 mit n₂ und einem jeweils zugehörigen Pfeil bezeichnet. Die geometrische Ausbildung der Deckplatte 3 erfolgt gemäß der Erfindung derart, daß Mantellinien 5, die einen Schallabstrahlwinkel α einschließen, welcher den bei Anregung der piezokeramischen Lamelle 1 entstehenden Körperschall umfaßt, der über die Fläche 21 in die Deckplatte 3 eintritt, so verlaufen, daß eine Oberfläche 4 der Deckplatte 3 möglichst ganzflächig und homogen vom Schall erfaßt wird. Bevorzugt ist die Deckplatte 3 so ausgebildet, daß sie ein selbständig eigenschwingungsfähiges System bildet. Dies kann z.B. durch Ausbildung der Deckplatte 3 durch in ein Epoxidharz eingebundene Glas- oder Siliziumoxidhohlkügelchen geschehen. In diesem Ausführungsbeispiel ist die Deckplatte 3 bspw. durch eine quaderförmige Ausbildung mit den Abmessungen (4 · 5 · 5) mm geformt. Ein solcher Quader kann bspw. eine Eigenresonanzfrequenz von 85 kHz aufweisen. Die der Wirkrichtung zugeordnete Eigenresonanzfrequenz der piezokeramischen Lamelle 1 kann bspw. zu 110 kHz bemessen sein. Ein solcher Wandler wird bevorzugt mit einer Eigenresonanz der Deckplatte, z.B. 85 kHz, betrieben, d.h. der Betrieb der Piezolamelle erfolgt außerhalb deren Eigenresonanz. Aufgrund der erfindungsgemäßen Anordnung und Ankopplung ist es möglich, große Bewegungsamplituden der Piezolamelle auch außerhalb deren Eigenresonanz zu erzeugen und auf die Deckplatte zu übertragen, was zu sehr großen Schwingungsamplituden der ultraschallabstrahlenden Oberfläche führt.
Die abgestrahlte Ultraschallenergie kann bezogen auf die abstrahlende Fläche etwa um einen Faktor fünf, gegenüber dem Stand der Technik, erhöht werden.
Der Betrieb der Piezolamelle außerhalb deren Resonanz bewirkt sehr kurze Ausschwingzeiten des Wandlers. Außerdem ermöglicht die erfindungsgemäße Anordnung zusätzliche Dämpfungsmaßnahmen ausschließlich genannter Piezolamelle, ohne eine Verringerung der Ultraschallamplitude zu bewirken.

In Figur 1 a ist in perspektivischer Ansicht dargestellt, daß dem unter Fig. 1 beschriebenen Gesamtsystem je nach gewünschter Richtcharakteristik oder Amplitude auch eine grundsätzlich beliebige Längsausdehnung mit länger ausgeführter Lamelle 1 und entsprechend bemessener Deckplatte 3 senkrecht zu den Normalenrichtungen n₁ und n₂ gegeben sein kann.
Figur 1b zeigt eine weitere Ausgestaltung der Deckplatte 3 in Form eines auf dem Kopf stehenden Pyramidenstumpfes 33, der mit seiner kleinen Deckfläche mit genannter Lamelle 1 an deren Schmalseite 21 verbunden ist. Die geneigten Seitenflächen des Pyramidenstumpfes sind dabei bevorzugt weitestgehend parallel zu genannten, den Winkel α (welcher bevorzugt 90° beträgt) einschließenden Mantellinien 5 ausgerichtet, wodurch eine gleichmäßige und homogene Erfassung der Oberfläche 4 durch den Körperschall erreicht wird. Diese pyramidenstumpfartige Ausbildung der Deckplatte 3 führt weiterhin zu einer Reduzierung der Resonanzfrequenz, einer Vergrößerung der Abstrahl- bzw. Empfängerfläche und damit zu einer Vergrößerung der Sende- bzw. Empfangsempfindlichkeit, sowie zu einer Verbesserung der Richtcharakteristik.

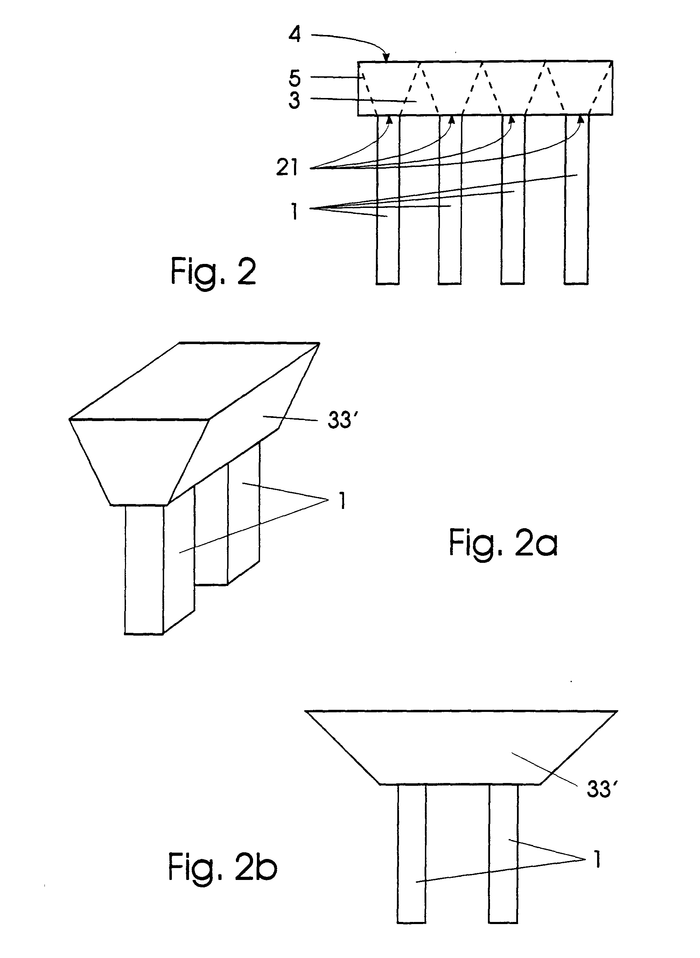

In Figur 2 ist eine weitere grundlegende erfindungsgemäße Ausführung dargestellt, bei der mehrere, voneinander gleich beabstandete piezoelektrische Lamellen 1 an ihren jeweiligen Schmalseiten 21 mit einer durchgängigen einstückigen Deckplatte 3 verbunden sind. Der Abstand der Lamellen 1 soll dabei gemäß obiger Maßgaben so bemessen sein, daß die Oberfläche 4 der Deckfläche 3 vom Körperschall der Piezolamellen 1 gleichmäßig und homogen erfaßt ist, wie es durch strichlinierte Mantellinien 5 schematisch angedeutet ist. Auch diese Anordnung kann analog zu Fig. 1a ausgeführt sein. Ebenso ist es möglich, solange die geforderte Biegesteifigkeit der Deckplatte 3 dadurch nicht beeinträchtigt wird, an der Deckplattenunterseite mehrere, den Mantellinien 5 folgende Ausnehmungen bzw. Abschrägungen ein- bzw. anzubringen.

Die Figuren 2 a und b zeigen eine weitere Ausführungsmöglichkeit zu Fig. 2, bei welcher die Deckplatte 33', ähnlich der zu Fig. 1b, als in einer Dimension dachförmig ausgezogener Pyramidenstumpf ausgebildet ist. Die Anregung der Deckplatte 33' erfolgt in diesem Beispiel durch zwei piezokeramische Lamellen 1, die mit gleicher Frequenz und Phasenlage anregbar sind.

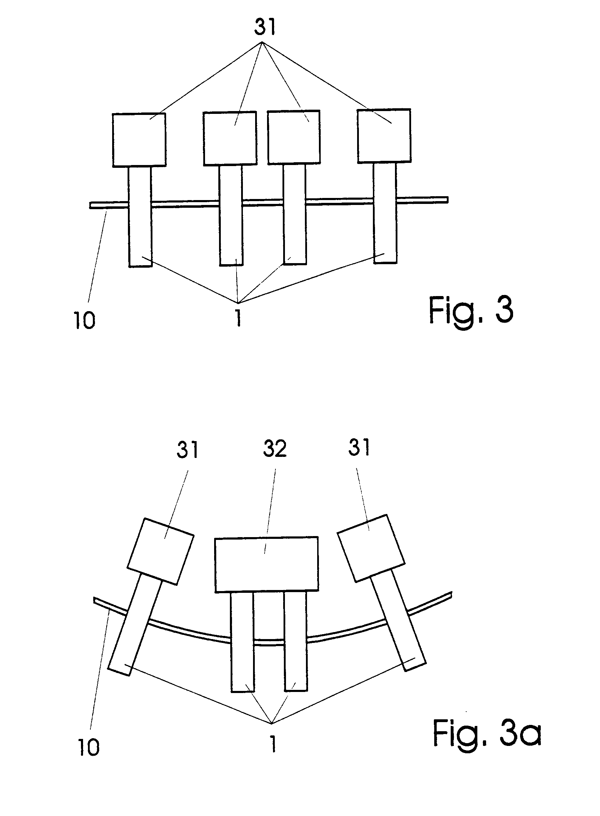

In Figur 3 ist eine weitere grundlegende Ausführung gemäß der Erfindung dargestellt, bei der mehrere, gemäß Fig. 1 ausgebildete modulare Systeme zum Einsatz gelangen, welche von einer Halterung 10, die bevorzugt in der Ebene des Masseschwerpunktes des Systems angeordnet ist, getragen werden. Jede der dabei eingesetzten Lamellen 1 trägt in diesem Beispiel ihre eigene Deckplatte 31. Eine derartige Ausbildung ist besonders zur variablen und voneinander abweichenden Ansteuerung bzgl. Frequenz, Phasenlage und/oder Amplitude der einzelnen Module geeignet, wodurch sich sowohl der Abstrahlwinkel der Schallkeule als auch die Richtung der Schallausbreitung generell in weiten Grenzen beeinflussen läßt.
Durch Ansteuerung mit beliebig wählbaren Impulsmustern in Raum und Zeit ist es prinzipiell möglich, Körper im Raum zu orten, ihre Entfernung, Größe und Lage zu bestimmen sowie ihre Bewegung zu verfolgen.
Weitestgehend analog zu Fig. 3 ist eine Ausführung gemäß Fig. 3a ausgebildet, wobei hier zwei Modulen eine gemeinsame Deckplatte 32 zugewiesen ist. Die gemeinsame Deckplatte 32 kann dabei einstückig ausgeführt, oder durch Verkleben zweier benachbarter Deckplatten 31 hergestellt sein. Die hiermit erreichbaren Vorteile entsprechen denen zu Fig. 3 beschriebenen. Je nach Verwendungszweck können die in den Figuren 3 und 3a vorgesehenen Module äquidistant oder untereinander, wie dargestellt, unterschiedlich beabstandet und, wie in Fig. 3a dargestellt, auf gekrümmten Bahnen angeordnet sein, um bestimmte Fokussierungseffekte zu erzielen.
Es liegt im Rahmen der Erfindung, auch die zu den Figuren 3 und 3a beschriebenen Ausführungen auch als flächenhaftes Array durch mehrfache Hintereinanderordnung dargestellter Baugruppen auszubilden.

Der Vorteil, den alle bis hierher beschriebenen Ausführungsformen bedingen, besteht im wesentlichen darin, daß je nach Verwendungszweck, eine beliebige Vielfalt an vorkonfektionierten piezokeramischen Lamellensystemen, bspw. unterschiedlicher Leistung, Eigenresonanzfrequenz, Geometrie, elektrischer Kapazität oder Schwingungsverhalten, und eine weitere Vielfalt an vorkonfektionierten Deckplatten, die sich z.B. bzgl. ihrer Geometrie, ihrer Materialeigenschaften und ihrer Resonanzeigenschaften unterscheiden, bereitgehalten werden kann, die dann für den speziellen Einsatzzweck miteinander in beliebiger, vor allem aber definiert vorbestimmbarer Weise in Verbindung gebracht werden können. Im Sendebetrieb derartiger Baugruppen wird das Ultraschallabstrahlverhalten im wesentlichen von den vorgegebenen Resonanzeigenschaften der Deckplatten 3, 31, 32, 33, 33' bestimmt, so daß die piezokeramische(n) Lamelle(n) 1 auch außerhalb, vor allem aber unterhalb der ihrer Wirkrichtung zugeordneten Resonanzfrequenz betreibbar ist (sind), ohne einen störenden oder das Gesamtsystem unwirksam werden lassenden Ultraschallamplitudenverlust aufzuweisen, wie dies entsprechend bekannter Bauformen des Standes der Technik der Fall ist. Ein weiterer wesentlicher Vorteil der Erfindung, der darin begründet ist, daß die gemäß der Erfindung geschaffenen Anordnungen unterhalb der Resonanzfrequenz der piezoelektrischen Anregungssysteme betreibbar sind, besteht darin, daß, um gleiche Ultraschalleistungen abgeben zu können, die jeweiligen Bauformen um einen Faktor zehn kleiner als äquivalente gemäß des Standes der Technik ausführbar sind.

Würde bspw. ein Wandler gemäß des Standes der Technik analog zu Fig. 1a, bei einer Resonanzfrequenz der Deckplatte von bspw. 60 kHz, mit ebenfalls 60 kHz betrieben werden, wären für die wirksame Piezolamellenlänge ca. 30 mm erforderlich. Demgegenüber ist für einen erfindungsgemäß aufgebauten Wandler bei gleichen erzielbaren Leistungen und einer ca. 10fach verkleinerten Abstrahloberfläche 4 lediglich eine wirksame Piezolamellenlänge von ca. 12 mm erforderlich.

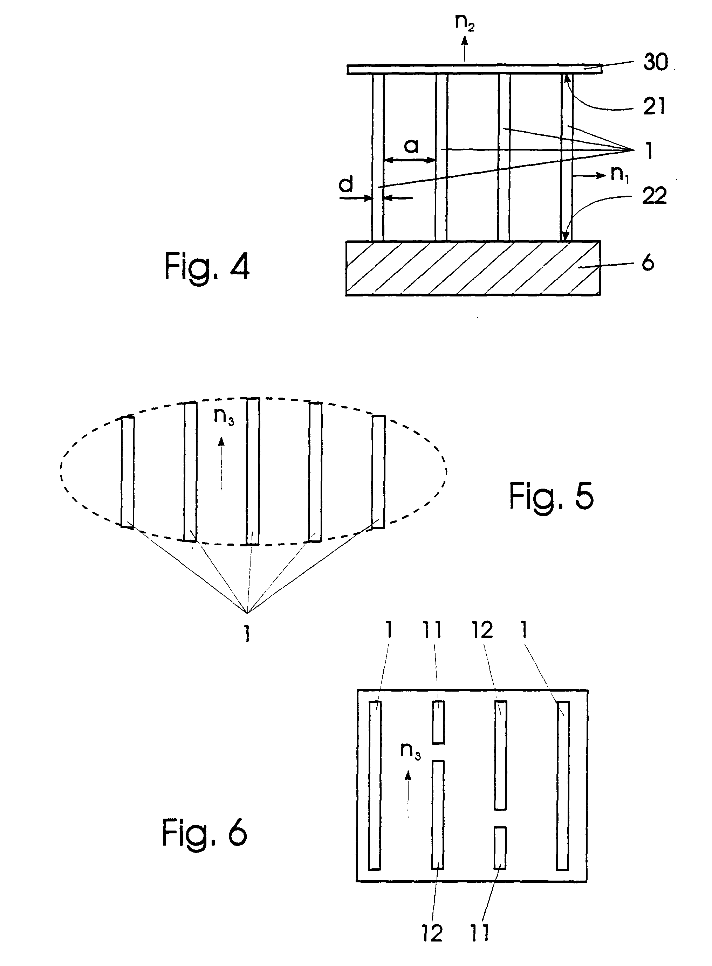

In den weiter zu beschreibenden, unter die Erfindung fallenden Ausführungsformen, wird ein etwas anderer Weg, unter grundsätzlicher Beibehaltung der erfindungswesentlichen Mittel, zur Anpassung der Schallkenn-Impedanz beschritten.
Eine dieser weiteren grundlegenden Ausführungsformen soll anhand einer schematischen Ausführung gemäß Fig. 4 beschrieben werden.
Diese Ausbildung weist eine massereiche Grundplatte 6, bspw. aus einer Keramik bestehend, und ein dazu parallel angeordnetes biegesteifes und massearmes Deckplättchen 30 auf, zwischen denen zueinander parallel eine Mehrzahl von Lamellen 1 aus einem homogenen piezoelektrischen Material angeordnet sind, die zu Grundplatte 6 und Deckplättchen 30 senkrecht verlaufen und über ihre Schmalseiten 22, 21 mit diesen verbunden sind. Zwischen den Lamellen 1 verbleibt jeweils ein Freiraum der Ausdehnung a, der in der Größenordnung eines Zehnfachen der Einzellamellendicke d in gleicher Richtung festgelegt ist. Die hier eingesetzten piezokeramischen Lamellen 1 sind bzgl. ihrer Dicke d möglichst dünn ausgeführt, was im wesentlichen durch die noch erforderliche mechanische Stabilität bzw. die nicht zu überschreitende elektrische Durchbruchspannung bestimmt ist. Für typische praktische Ausführungen haben die Einzellamellen 1 dabei Abmessungen von bspw. (0,2 · 3 · 18) mm, wobei in der Regel mehr als die dargestellte Anzahl einzelner Lamellen 1 zum Einsatz gelangen. Den Einzellamellen 1 ist dabei insbesondere ein Längen/Höhen-Verhältnis in der Größenordnung von 5 - 10 gegeben. Die genannten Höhen und Längen, welche im wesentlichen die jeweiligen Eigenresonanzfrequenzen des Wandlers bestimmen, beschränken die Erfindung jedoch in keinem Fall nur darauf, Die jeweils konkreten Bemessungsvorschriften hängen einzig von den gewünschten Wandlereigenschaften, wie z.B. Arbeitsfrequenz, Größe, Schallamplitude, ab, woraus eine Vielzahl denkbarer, unter die Erfindung fallender Ausführungsformen resultiert.
Für genanntes Deckplättchen 30 kommt im Ausführungsbeispiel gemäß Fig. 4 bspw. eine dünne, ca. 0,3 mm dicke Scheibe aus Glas, Silizium, Keramik oder einem geeigneten Kunststoff in Betracht, die nach der Maßgabe der erforderlichen Biegesteifheit und geringen Masse auswählbar ist. Auch in dieser Bauform sind, ebenso wie in den zuvor beschriebenen, zellular aufgebaute Materialien, die aufgrund ihrer extrem geringen Masse dicker und damit biegesteifer aufgebaut werden können, vorteilhaft einsetzbar. Zur Unterdrückung etwaiger unerwünschter Querresonanzen können die piezokeramischen Lamellen 1 in einer Richtung n₃, die senkrecht zu den Normalenrichtungen n₂ und n₁ mit voneinander unterschiedlichen Längen vorgesehen sein, welche sich, wie im Beispiel der Fig. 5 dargestellt, entsprechend der Sehnenlängen einer Sehnenschar in einer strichliniert dargestellten Ellipse, oder eines Kreises, bemessen. Ebenso können bei einer gewünschten rechteckförmigen Anordnung die jeweiligen Einzellamellen 1 in Teilstücke 11, 12 unterschiedlicher Länge in Richtung n₃ unterteilt sein, wie es in Fig. 6 schematisch angedeutet ist.
Ein entsprechend obiger Dimensionierungsangaben ausgebildeter Wandler gemäß Fig. 4 besitzt bspw. Grundresonanzfrequenzen bei 50 kHz bzw. 210 kHz. Ein solcher Wandler ist zum Abstrahlen und zum Empfang von Luftultraschallwellen in einem breiten Frequenzspektrum außerhalb seiner Eigenresonanzstellen ausgelegt. Da er in dieser Betriebsart nur äußerst geringe Nachschwingerscheinungen zeigt, ist er auch zu Messungen extrem kurzer Distanzen sowie zur Informationsübertragung sehr gut geeignet. Dabei werden alle Lamellen 1 gleichphasig mit gleicher Frequenz und Amplitude angeregt.

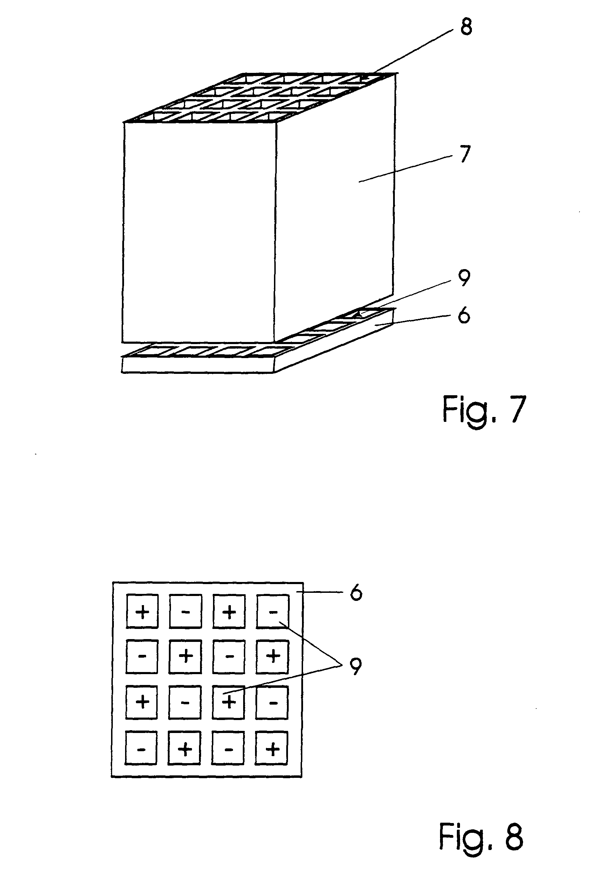

Eine weitere Möglichkeit zur Ausbildung entsprechend dünner piezokeramischer Lamellen 1 ist in Figur 7 nicht maßstäblich, schematisch dargestellt. Diese Darstellung, wie auch die einer Grundplatte 6 gemäß Fig. 8, entspricht nicht den in der Praxis vorliegenden Verhältnissen und dient lediglich der anschaulichen Erläuterung. Hier wird ein bevorzugt stranggepreßter, piezokeramischer, gesinterter Hohlkörper 7 mit wabenförmig verteilten Hohlräumen 8 verwendet. Die Hohlräume 8, deren Anzahl in Realität bei einer Abmessung des Hohlkörpers von bspw. (20 · 20 · 5) mm etwa 50 beträgt, sind jeweils mit einer, nicht näher dargestellten, metallischen Kontaktierungsbelegung versehen, wodurch die als Lamellen verbleibenden, bspw. 0,3 mm dicken Keramikstege polarisierbar sind. Dabei werden aneinanderfolgende Waben 8 mit elektrischen Spannungen unterschiedlichem Vorzeichens beaufschlagt. Um dies zu bewerkstelligen ist eine, in Fig. 8 im Detail näher dargestellte, schachbrettartig mit entsprechenden Elektroden 9 versehende Grundplatte 6 vorgesehen, mit der genannter Hohlkörper 7 an seiner Bodenfläche zu verbinden ist. Die Kontaktierung der jeweiligen Elektroden 9 untereinander und mit den jeweiligen Kontaktbelegungen der Hohlräume 8 ist aus Gründen der Übersichtlichkeit nicht weiter dargestellt. Die mit genannter Grundplatte 6 versehene eine Endfläche des Hohlkörpers 7 ist an der gegenüberliegenden Endfläche wiederum mit einer Deckplatte 3 bzw. Deckplättchen 30 entsprechend der bisherigen Ausführungsformen versehen, ohne daß diese Maßnahme in Fig. 7 näher dargestellt ist. Ein gemäß dieser Ausführungsform ausgebildeter Wandler ist mechanisch besonders stabil, ökonomisch und vorteilhaft herstellbar, und läßt sich in gleicher Weise, wie die bisher beschriebenen verwenden.

Alle bisherigen Ausführungsformen sind für einen reinen Kolbenhub der jeweiligen Deckplatten bzw. des jeweiligen Deckplättchens sowohl im sendenden als auch empfangenden Betrieb des Wandlers konzipiert.

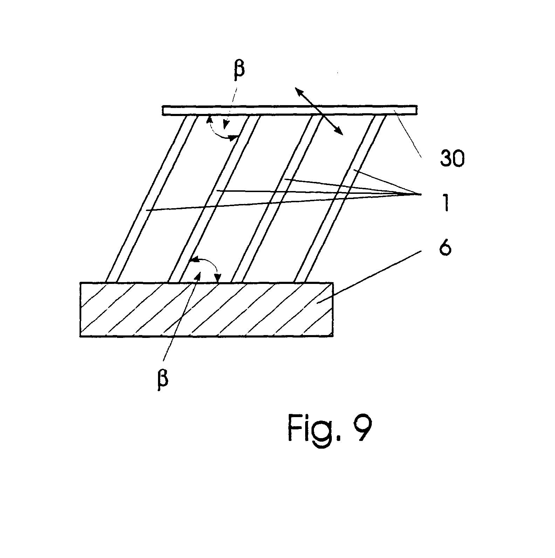

Im weiteren ist in Figur 9 schematisch eine Ausführungsform dargestellt, die im wesentlichen analog zu Fig. 4 ausgebildet ist, bei der jedoch die zum Einsatz gelangenden Einzellamellen 1 in bezug auf ein verwendetes Deckplättchen 30 und zu einer Grundplatte 6 in einem Winkel β, mit β < 90°, angeordnet sind. In diesem Fall sind die Lamellen 1 in Form sogenannter Biegeschwinger ausgebildet, was bspw., entsprechend des Standes der Technik, durch zwei unterschiedlich polarisierte Keramikschichten realisierbar ist. Derartige Biegeschwinger liefern im allgemeinen viel größere Amplituden. Eine solche Anordnung ist akustisch besonders "weich" und hat daher ein noch besseres Ankoppelverhalten bspw. an Luft, als die bisher beschriebenen Ausführungsformen und kann deshalb besonders als schallempfangender Wandler Verwendung finden. Die Schwingungsrichtung, der das Deckplättchen 30 folgt, ist in Fig. 9 durch einen Doppelpfeil angedeutet.

### Bezugszeichenliste

- 1, 11, 12: piezoelektrische Lamelle
- 21,22: Schmalseiten einer piezoelektrischen Lamelle
- 23: große Seitflächen
- 3, 31, 32: Deckplatte
- 33, 33': Deckplatte als Pyramidenstumpf, -dach
- 30: Deckplättchen
- 4: schallabstrahlende bzw. empfangende Oberfläche
- 5: Mantellinien
- α: Schallabstrahlwinkel
- 6: Grundplatte
- 7: piezokeramischer Hohlkörper
- 8: wabenförmiger Hohlraum
- 9: schachbrettartige Kontaktierungsbelegung
- 10: Halterung
- n₁: Lamellennormale
- n₂: Deckplatten- bzw. Deckplättchennormale
- n₃: Normalenrichtung senkrecht zu n₁ und n₂
- β: Biegebalkenneigungswinkel
- a: Lamellenabstand
- d: Lamellendicke

## Patentansprüche

1. Piezoelektrischer Ultraschallwandler mit anpaßbarer Schallkenn-Impedanz bestehend aus wenigstens einer, an ihren großen Seitflächen mit Elektroden versehenen Lamelle aus piezokeramischen Material, welche im d₃₁-Modus betreibbar ist, wenigstens einer schallabstrahlenden und/oder empfangenden Fläche, wobei der Masseschwerpunkt des Gesamtwandlersystems weitab der schallabgebenden bzw. -empfangenden Oberfläche (4) gelegt ist, **dadurch gekennzeichnet, daß**
- wenigstens eine Lamelle (1) vorgesehen ist, die an einer ihrer Schmalseiten (21) mit wenigstens einer geometrisch variabel anpaßbaren, biegesteifen und in bezug auf die Gesamtwandler- bzw. Lamellenmasse massearmen Deckplatte (30; 3, 31, 32, 33, 33'), die bezüglich der ihr zugewiesenen geometrischen Bemessung so ausgebildet und mit kleiner Ankoppelfläche an die Schmalseite der Lamelle (1) angebunden ist, daß sie ein selbständig eigenschwingungsfähiges System bildet, derart verbunden ist,
- daß zumindest im Fall eines schallabgebenden Betriebes die gesamte Oberfläche (4) der Deckplatte (3, 31, 32, 33, 33') durch Mantellinien (5) eines Abstrahlwinkels (α), mit denen die piezoelektrische Lamelle (1) in genannte Deckplatte (3, 31, 32, 33, 33') einstrahlt, möglichst vollständig erfaßt ist und
- einzig dieser Oberfläche (4) die Funktion der schallabstrahlenden und/oder -empfangenden Fläche zugewiesen ist,
wobei die Eigenresonanzfrequenzen der wenigstens einen piezokeramischen Lamelle (1) und der schallabstrahlenden und/oder -empfangenden Deckplatte zueinander deutlich unterschiedlich festlegbar sind.

2. Piezoelektrischer Ultraschallwandler gemäß Anspruch 1, **dadurch gekennzeichnet, daß** die Geometrie der Deckplatte (3, 31, 32, 33, 33') zumindest in ihrer äußeren Deckplattenberandung dem Abstrahlwinkel (α) der Lamelle(n) im wesentlichen folgend festgelegt ist.

3. Piezoelektrischer Ultraschallwandler gemäß Anspruch 1 oder 2, **dadurch gekennzeichnet, daß** mehreren zueinander parallel angeordneten und voneinander beabstandeten piezoelektrischen Lamellen (1) an ihren jeweiligen Schmalseiten (21) eine gemeinsame einstückige Deckplatte (30; 3, 32, 33, 33') zugewiesen ist.

4. Piezoelektrischer Ultraschallwandler gemäß Anspruch 1 oder 2, **dadurch gekennzeichnet, daß** mehreren zueinander parallel angeordneten und voneinander beabstandeten piezoelektrischen Lamellen (1) an ihren jeweiligen Schmalseiten (21) jeweils eine separate Deckplatte (31, 33) zugewiesen ist.

5. Piezoelektrischer Ultraschallwandler gemäß Anspruch 4, **dadurch gekennzeichnet, daß** ein Teil benachbarter Deckplatten (31, 33') teilweise miteinander verbunden und insbesondere als einstückige Deckplatte (32, 33') ausgebildet ist.

6. Piezoelektrischer Ultraschallwandler gemäß einem der Ansprüche 1 bis 5, **dadurch gekennzeichnet, daß** für das Material der Deckplatte(n) (3, 31, 32, 33, 33') eins mit vorgebbarer Schallkenn-Impedanz ausgewählt ist, welches vorzugsweise aus in Harz eingebetteten Hohlkugeln besteht.

7. Piezoelektrischer Ultraschallwandler gemäß einem der Ansprüche 1 bis 6, **dadurch gekennzeichnet, daß** die Normalen (n₁) der piezoelektrischen Lamelle(n) (1) und die Normalen (n₂) der Deckplatte(n) (30; 3, 31, 32, 33, 33') zueinander senkrecht stehend angeordnet sind.

8. Piezoelektrischer Ultraschallwandler gemäß Anspruch 1, **dadurch gekennzeichnet, daß** genannter Masseschwerpunkt des Gesamtsystems durch eine massereiche Grundplatte (6) in das Gebiet mehrerer zueinander beabstandeter, benachbart angeordneter piezoelektrischer Einzellamellen (1) verlegt ist und die piezoelektrischen Lamellen an ihren gegenüberliegenden Schmalseiten (22, 21) mit genannter Grundplatte (6) bzw. einem einstückigen dünnen Deckplättchen (30) verbunden sind.

9. Piezoelektrischer Ultraschallwandler gemäß Anspruch 8, **dadurch gekennzeichnet, daß** genannte Einzellamellen in ihrer Dicke (d) so dünn ausgeführt sind, wie es die mechanische Stabilität und/oder die elektrische Durchbruchspannung zuläßt und ihr gegenseitiger Abstand (a) in der Größenordnung des Zehnfachen genannter Dicke (d) festgelegt ist.

10. Piezoelektrischer Ultraschallwandler gemäß Anspruch 8 und/oder 9, **dadurch gekennzeichnet, daß** genannte Einzellamellen (1) als parallel zueinander angeordnete piezoelektrische Biegeschwinger ausgebildet sind, die in bezug zu genanntem Deckplättchen (30) und genannter Grundplatte (6) einen Winkel (β), mit β < 90°, einschließen.

11. Piezoelektrischer Ultraschallwandler gemäß einem der Ansprüche 8 bis 10, **dadurch gekennzeichnet, daß** den piezoelektrischen Lamellen (1) in einer Richtung zur Normalenrichtung (n₁) der Lamellen und zur Normalenrichtung (n₂) des Deckplättchens (30) senkrecht verlaufenden Richtung (n₃) voneinander verschiedene Längen gegeben sind, deren Bemessung insbesondere einer Sehnenlänge einer Sehnenschar in einer Ellipse folgt.

12. Piezoelektrischer Ultraschallwandler gemäß einem der Ansprüche 8 bis 10, **dadurch gekennzeichnet, daß** die piezoelektrischen Einzellamellen einer in Richtung zur Normalenrichtung (n₁) der Lamellen und zur Normalenrichtung (n₂) des Deckplättchens (30) senkrecht verlaufenden Richtung (n₃) zumindest teilweise als unterbrochene Lamellen (11 ,12) unterschiedliche Länge ausgeführt sind.

13. Piezoelektrischer Ultraschallwandler gemäß einem der Ansprüche (1 bis 7) oder 8, **dadurch gekennzeichnet, daß** die piezoelektrischen Lamellen (1) durch einen stranggepreßten piezokerarnischen Hohlkörper (7) mit wabenförmig verteilten Hohlräumen (8), die mit einer elektrischen Innenkontaktierung versehen sind, gebildet sind, wobei Mittel vorgesehen sind, die aneinanderfolgende Waben (7) alternierend polarisieren.

14. Piezoelektrischer Ultraschallwandler gemäß Anspruch 13, **dadurch gekennzeichnet, daß** genannte Mittel zur unterschiedlichen Polarisation durch eine, mit genannten wabenförmigen Hohlräumen (8) folgende schachbrettartige Kontaktierungsbelegung (9) versehenen Grundplatte (6) gebildet sind.

## Claims

1. Piezoelectric ultrasonic transducer of adaptable sound characteristic impedance comprising at least one sheet made of piezoceramic material being provided with electrodes on its large lateral faces, said sheet being operable in the d₃₁-mode, at least one sound emitting and sound receiving, respectively, face, in which the center of mass of the entire transducer system is arranged remote from the sound emitting and sound receiving, respectively, face (4), **characterized in that**
- at least one sheet (1) is provided which, via one of its narrow sides (21), is connected to at least one geometrically and variably adaptable rigid cover plate (30; 3, 31, 32, 33, 33') of low mass, compared to the entire transducer and sheet mass, respectively, in which said cover plate is embodied with respect to the selected geometrical dimensions and coupled to the narrow side of the sheet (1) via a narrow coupling face to yield an independent self-resonant system, in such a manner
- that at least in the sound emitting mode the entire surface (4) of said cover plate (3, 31, 32, 33, 33') is substantially completely covered by the surface lines (5) of an emission angle (α) under which the piezoelectric sheet (1) irradiates said cover plate (3, 31, 32, 33, 33') and
- only said surface (4) has the function of a sound-emitting and receiving, respectively, area,
the self-resonant frequencies of said at least one piezoceramic sheet (1) and of the sound emitting and sound receiving, respectively, cover plate being selected distinctly different from one another.

2. Piezoelectric ultrasonic transducer as claimed in claim 1, wherein the geometry of said cover plate (3, 31, 32, 33, 33') is substantially selected to follow the the emission angle (α) of the sheet(s) at least in its external rim portions.

3. Piezoelectric ultrasonic transducer as claimed in claim 1 or 2, wherein a plurality of piezoelectric sheets (1) in mutually parallel and spaced relation are provided with a common one-piece cover plate (30; 3, 32, 33, 33') on their respective narrow sides (21).

4. Piezoelectric ultrasonic transducer as claimed in claim 1 or 2, wherein a plurality of piezoelectric sheets (1) in mutually parallel and spaced relation are provided with one respective individual cover plate (31, 32) on the respective narrow sides (21).

5. Piezoelectric ultrasonic transducer as claimed in 4, wherein a part of adjacent cover plates (31, 33') is partially connected with one another and particularly is embodied as a one-piece cover plate (32, 33').

6. Piezoelectric ultrasonic transducer as claimed in claims 1 to 5, wherein a material of pre-selectable sound-characteristic impedance is selected for the cover plate(s) (3, 31, 32, 33, 33') preferably consisting of hollow spheres embedded in resin.

7. Piezoelectric ultrasonic transducer as claimed in one of the preceding claims 1 to 6, wherein the normals (n₁) of the piezoelectric sheet(s) (1) and the normals (n₂) of the cover plate(s) (30; 3, 31, 32, 33, 33') are arranged at right angles to one another.

8. Piezoelectric ultrasonic transducer as claimed in claim 1, wherein said center of mass of the entire system is shifted by means of a base plate (6), rich of mass, to the range of a plurality of individual piezoelectric sheets (1) which are arranged in adjacent spaced relation and wherein said piezoelectric sheets are connected via their opposing narrow sides (22, 21) to said base plate (6) and to a one-piece cover lamina (30), respectively.

9. Piezoelectric ultrasonic transducer as claimed in claim 8, wherein the thickness (d) of said individual sheets is embodied so thin as the mechanical strength and/or the electric breakdown voltage permits and wherein the mutual space (a) of the individual sheets is determined by an order of size of tenfold the thickness (d).

10. Piezoelectric ultrasonic transducer as claimed in claim 8 and/or 9, wherein said individual sheets (1) are embodied as piezoelectric bending resonators which include an angle (β) with said cover lamina (30) and said base plate (6), wherein β<90°.

11. Piezoelectric ultrasonic transducer as claimed in claim 8 to 10, wherein said piezoelectric sheets (1) are of different lengths along a direction (n₃) at right angles to the normal direction (n₁) of the sheets and to the normal direction (n₂) of the cover lamina (30), the dimensions of said lengths follow, in particular, a chord length of a group of chords of an ellipse.

12. Piezoelectric ultrasonic transducer as claimed in one of the preceding claims 8 to 10, wherein said piezoelectric individual sheets are embodied at least partially as interrupted sheets (11, 12) along a direction (n₃) at right angles to the normal direction (n₁) of the sheets and to the normal direction (n₂) of the cover lamina (30).

13. Piezoelectric ultrasonic transducer as claimed in one of the preceding claims (1 to 7) or 8, wherein the piezoelectric sheets (1) are constituted of an extruded piezoceramic hollow body (7) with pockets (8) in honeycomb structure which are provided with internal electrical contacts, and wherein means are provided which alternatingly polarize subsequent pockets (7).

14. Piezoelectric ultrasonic transducer as claimed in claim 13, wherein said means for different polarization is constituted by a base plate (6) provided with a chess-board contact array (9) following said pockets (8) of honeycomb structure.

## Revendications

1. Un générateur d'ultrasons piézo-électrique pourvu d'une impédance caractéristique adaptable comprenant au moins une lamelle réalisée dans une matière piézo-céramique et doté sur les faces latérales grand côté d'électrodes, fonctionnant dans le mode d₃₁et au moins une face émettrice et/ou une face réceptrice , le centre de masse du système générateur se trouvant situé loin de la surface (4) d'émission ou de réception acoustique, est **caractérisé en ce que**
- au moins une lamelle (1) est disposée sur le générateur, qui sur une de ses faces petit côté (21) est mise en contact avec la plaque de couverture (30; 3, 31, 32,33, 33'), variable quant à sa géométrie, adaptable, résistant à la flexion et dont la masse est relativement petite par rapport à la masse totale du générateur ou des lamelles, et dont le dimensionnement géométrique attribué correspond aux exigences, et qui, enfin, par la face de couplage ' est en contact avec la surface du petit côté de la lamelle (1) et
- au moins au régime émetteur d'ultrasons, la surface (4) de la plaque de couverture (3, 31, 32, 33, 33') est englobée , si possible totalement, par les courbes enveloppes (5) d'un angle émetteur (α) sous lequel la lamelle piézo-électrique (1) agit sur la plaque de couverture ( 3, 31, 32, 33, 33') et
- que c'est la seule surface (4) dotée de la fonction réceptrice et/ou émettrice;
les fréquences de résonance propre d'au moins une lamelle piézo-céramique (1) et de la plaque de couverture émettrice et/ou réceptrice étant susceptibles d'être définie différemment les unes par rapport les autres.

2. Le générateur ultrasonore piézo-électrique suivant la revendication 1 est **caractérisé en ce que** la géométrie de la plaque de couverture ( 3, 31, 32, 33, 33') est définie de sorte qu'au moins les bords extérieurs de la plaque de couverture suivent dans l'essentiel l'angle d'émission (α) de la (des) lamelle (s)

3. Le générateur d'ultrasons piézo-électrique suivant la revendication 1 ou 2 est **caractérisé en ce que**, à la plaque de couverture commune formant une seule pièce ( 3, 30, 32, 33, 33') sont attribuées plusieurs lamelles piézo-céramiques (1) disposées en parallèle et avec un certaine distance les une par rapport aux autres, dont les petits côtés (21) sont en contact avec la plaque de couverture.

4. Le générateur d'ultrasons piézo-électrique suivant la revendication 1 ou 2 est **caractérisé en ce que** plusieurs lamelles piézo-céramiques (1) disposées en parallèle et avec une certaine distance les unes par rapport aux autres, se voient attribuer chacune une plaque de couverture individuelle (31, 33) sur leur petits côtés (21).

5. Le générateur d'ultrasons piézo-électrique suivant la revendication 4 est **caractérisé en ce qu'**une partie des plaques de couverture voisines (31, 33') sont en partie reliées entre elles de sorte que la plaque de couverture (32, 33') forme une seule pièce.

6. Le générateur d'ultrasons piézo-électrique suivant les revendications 1 à 5 est **caractérisé en ce que** le matériau utilisé de préférence pour la plaque de couverture ( 3, 31, 32, 33, 33') se compose de billes creuses incluses dans un milieu résineux, dont l'impédance caractéristique peut être prédéterminée.

7. Le générateur ultrasonore piézo-électrique suivant les revendications 1 à 6 est **caractérisé en ce que** les normales (n₁) de la (des) lamelle(s) piézo-électrique(s) (1) et les normales (n₂) de la (des) plaque(s) de couverture ( 3, 31, 32, 33, 33') sont disposées verticalement et perpendiculairement les unes par rapport aux autres.

8. Le générateur d'ultrasons piézo-électrique suivant la revendication 1 est **caractérisé en ce que** le dit centre de masse du système tout entier est transposé, en déplaçant la plaque d'assise massique (6), dans une zone où se trouvent plusieurs lamelles piézo-électriques individuelles (1) disposées les unes à côté des autres mais tout en gardant une certaine distance entre elles, les petits côtés (22, 21) des lamelles piézo-électriques étant reliés à la plaque d'assise (6) ou à une mince plaquette de couverture (30) réalisée dans une seule pièce (30).

9. Le générateur d'ultrasons piézo-électrique suivant la revendication 8 est **caractérisé en ce que** l'épaisseur des lamelles individuelles (d) est aussi mince que possible tout en assurant la stabilité mécanique et/ou la tension de claquage électrique, la distance (a) entre les lamelles étant dix fois plus grande que leur épaisseur (d).

10. Le générateur d'ultrasons piézo-électrique suivant la revendication 8 et/ou 9 est **caractérisé en ce que** les dites lamelles individuelles (1) sont conçues comme résonateurs de flexion (2) piézo-électriques disposés en parallèle les uns par rapport aux autres et formant un angle (β), β < 90°, par rapport à la plaquette de couverture (30) et à la dite plaque d'assise (6).

11. Le générateur d'ultrasons piézo-électrique suivant les revendications 8 à 10 est **caractérisé en ce que** les lamelles piézo-électriques (1) se voient attribuées des longueurs différentes, dont le dimensionnement, en particulier d'une des cordes, se fait en ellipse, la différence de longueurs étant fonction de la direction des lamelles orientées soit en direction de la normale (n₁) des lamelles soit en direction perpendiculaire (n₃) à la direction de la normale (n₂) de la plaquette (30).

12. Le générateur d'ultrasons suivant une des revendications 8 à 10 est **caractérisé en ce que** les lamelles piézo-électriques individuelles orientées en direction (n₃) - donc dans le sens de la normale (n₁) des lamelles et dans le sens perpendiculaire à la normale (n₂) de la plaquette de couverture (30) - sont exécutées, au moins en partie, en forme de lamelles interrompues (11,12) de longueurs différentes.

13. Le générateur d'ultrasons suivant une des revendications ( 1 à 7) ou la revendication 8 est **caractérisé en ce que** les lamelles piézo-électriques (1) sont formées par un corps creux piézo-céramique filé à la presse (7), comprenant des alvéoles disposés en forme de nids d'abeilles (8) et dotés, à l'intérieur, de contacts électriques, et que des moyens sont prévus pour permettre de polariser en alternant les nids d'abeilles juxtaposés (7).

14. Le générateur d'ultrasons suivant la revendication 13 est **caractérisé en ce que** les moyens mentionnés assurant la polarisation alternante sont formés par une plaque d'assise (6) dotée de contacts (9) montés en échiquier en suivant les alvéoles (8) disposés en nids d'abeilles.
